(19) Europäisches Patentamt
European Patent Office
Office européen des brevets

(11) **EP 3 654 076 A1**

(12) **EUROPEAN PATENT APPLICATION**

(43) Date of publication:
**20.05.2020 Bulletin 2020/21**

(51) Int Cl.:
***G02B 5/18*** *(2006.01)*   ***G02B 27/00*** *(2006.01)*

(21) Application number: **18206402.2**

(22) Date of filing: **15.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **FRAUNHOFER-GESELLSCHAFT zur Förderung der angewandten Forschung e.V.
80686 München (DE)**

• **Karlsruher Institut für Technologie (KIT)
76131 Karlsruhe (DE)**

(72) Inventors:
• **LI, Zheng
76131 Karlsruhe (DE)**
• **TAPHANEL, Miro
76228 Stupferich (DE)**

(74) Representative: **Friese Goeden Patentanwälte PartGmbB
Widenmayerstraße 49
80538 München (DE)**

(54) **DIFFRACTIVE OPTICAL ELEMENT, CONFOCAL MICROSCOPE AND METHOD FOR DESIGNING A DIFFRACTIVE OPTICAL ELEMENT**

(57) The invention relates to a diffractive optical element (1) for generating from an input light beam (65) a plurality of smaller light spots (66) on a target surface (21), comprising a material layer (10) having a plurality of at least first and second subareas (11, 12, 13) having any of first and second absorption coefficients or first and second thicknesses, wherein the arrangement of said first and second subareas (11, 12, 13) on the material layer (10) is obtained by calculating the field distribution $u_w(x,y)$ in a plane (19) defined by the material layer (10) for a single light spot (66) by means of a Rayleigh-Sommerfeld-Integral, arranging and overlapping said field distribution $u_w(x,y)$ in said plane (19) for a predetermined arrangement (67) of a plurality of light spots (66), adding a plane-wave component W to the overlapped field distribution $u_0(x,y)$ to get a plane-wave-combined field distribution $u_p(x,y)$, and determining the phase $\varphi_B(x,y)$ and/or the amplitude of the plane-wave-combined field distribution $u_p(x,y)$ at least in the subareas (11, 12, 13). Furthermore, the invention relates to a confocal microscope (9) comprising such an element and a method for designing at least one diffractive optical element.

Fig. 5

**Description**

Background of the invention

The invention relates to a diffractive optical element for generating from an input light beam a plurality of smaller light spots on a target surface, comprising a material layer having a plurality of at least first and second subareas having any of first and second absorption coefficients or first and second thicknesses. Furthermore, the invention relates to a confocal microscope comprising such a diffractive optical element and a method for designing such a diffractive optical element. The invention may be used in the field of optical storage and microscopy

WO 2006/035393 A2 discloses a diffractive optical element for generating a periodic light signal. This known element is divided in a plurality of subareas which are intended to cause a phase shift of transmitted light which amounts either 0 or $\pi$. This manipulated light interferes so that a periodic light signal is obtained on a target surface in a certain distance from the diffractive optical element.

However, when the target surface is imaged through the diffractive optical element, the image is deteriorated considerably. Thus, this known element is usable only in transmitted light methods, i.e. the target must be a transparent object.

Therefore, it is an object of the invention to provide a diffractive optical element, a method for its design and a confocal microscope being usable for transparent and opaque objects.

Summary of the invention

The object is solved in one embodiment by a diffractive optical element for generating from an input light beam a plurality of smaller light spots on a target surface, comprising a material layer having a plurality of at least first and second subareas having any of first and second absorption coefficients or first and second thicknesses, wherein the arrangement of said first and second subareas on the material layer is obtainable by calculating the field distribution $u_w(x,y)$ in a plane defined by the material layer for a single light spot, arranging and overlapping said field distribution $u_w(x,y)$ in said plane for a predetermined arrangement of a plurality of light spots, adding a plane-wave component $W$ to the overlapped field distribution $u_0(x,y)$ to get a plane-wave-combined field distribution $u_p(x,y)$, determining the phase $\varphi_B(x,y)$ and/or the amplitude of the plane-wave-combined field distribution $u_p(x,y)$ at least in the subareas.

The object is solved in another embodiment by a diffractive optical element for generating from an input light beam a plurality of smaller light spots on a target surface, comprising a material layer having a plurality of at least first and second subareas having any of first and second absorption coefficients or first and second thicknesses, wherein the arrangement of said first and second subareas on the material layer is obtainable by calculating the field distribution $u_w(x,y)$ in a plane defined by the material layer for a single light spot by means of a Rayleigh-Sommerfeld-Integral, arranging and overlapping said field distribution $u_w(x,y)$ in said plane for a predetermined arrangement of a plurality of light spots, adding a plane-wave component $W$ to the overlapped field distribution $u_0(x,y)$ to get a plane-wave-combined field distribution $u_p(x,y)$, determining the phase $\varphi_B(x,y)$ and/or the amplitude of the plane-wave-combined field distribution $u_p(x,y)$ at least in the subareas.

The object is solved in still another embodiment by a method for designing at least one diffractive optical element comprising a material layer having a plurality of at least first and second subareas having any of first and second absorption coefficients or first and second thicknesses, wherein the arrangement of said first and second subareas on the material layer is obtained by calculating the field distribution $u_w(x,y)$ in a plane defined by the material layer for a single light spot at a given distance, arranging and overlapping said field distribution $u_w(x,y)$ in said plane for a predetermined arrangement of a plurality of light spots, adding a plane-wave component W to the overlapped field distribution $u_0(x,y)$ to get a plane-wave-combined field distribution $u_p(x,y)$, determining the phase $\varphi_B(x,y)$ and/or the amplitude of the plane-wave-combined field distribution $u_p(x,y)$ at least in the subareas.

The object is solved in still another embodiment by a confocal microscope comprising at least one light source, being adapted to emit at least one input light beam; at least one beam splitter having a first port, a second port and a third port, and being adapted to receive said input light beam on said first port and to direct it to said second port; at least one diffractive optical element being operable to receive said input light beam from the second port of said beam splitter and generating a plurality of smaller light spots on a target surface being arranged at a distance; at least one focusing means and an image sensor being adapted to capture an image of said target surface from light originating from the target surface and passing through said diffractive optical element to the second port of said beam splitter, the third port of said beam splitter and said lens.

Brief description of the drawings

The accompanying drawings which are incorporated in and constitute a part of the specification, illustrate one or more embodiments described herein, and, together with the detailed description, explain aspects of these embodiments. In the drawings

Figure 1 illustrates a diffractive optical element according to the invention.

Figure 2 illustrates a cross sectional view of a diffractive optical element according to a first embodiment of the invention.

Figure 3 illustrates a cross sectional view of a diffractive optical element according to a second embodiment of the invention.

Figure 4 illustrates a cross sectional view of a diffractive optical element according to a third embodiment of the invention.

Figure 5 illustrates a cross sectional view of a confocal microscope according to a first embodiment of the invention.

Figure 6 illustrates a cross sectional view of a confocal microscope according to a second embodiment of the invention.

Figure 7 illustrates a design method for a known diffractive optical element.

Figure 8 illustrates the performance of a confocal microscope having a known diffractive optical element.

Figure 9 illustrates a design method for a diffractive optical element according to the invention.

Figure 10 illustrates different method steps during the design of a diffractive optical element according to the invention.

Figure 11 illustrates one method steps during the design of a diffractive optical element according to the invention.

Figure 12 illustrates the performance of a confocal microscope having a diffractive optical element according to the invention.

Figure 13 illustrates a cross sectional view of a confocal microscope according to a third embodiment of the invention.

Detailed description

The invention relates to a diffractive optical element for generating from an input light beam a plurality of smaller light spots on a target surface. In some embodiments, the diffractive optical element may be part of a microscope, more specifically a confocal microscope. In these embodiments, the target may be an object or a material to be analyzed. In other embodiments, the diffractive optical element may be part of a data storage device, so that the target may be an optical storage means with different unit cells or pixels which may alter the intensity or polarization of transmitted or reflected light, thereby coding at least one bit. In any case, the diffractive optical element may generate a plurality of light spots with high numerical aperture so that a plurality of locations or unit cells may be illuminated and thereby analyzed or read.

According to the invention, the diffractive optical element 1 comprises a material layer 10 having a plurality of at least first and second subareas 11, 12. Each subarea may have any of first and second absorption coefficients or first and second thicknesses. Thus, the phase or the amplitude or both is altered when light is transmitted or reflected at the material layer 10 of the diffractive optical element 1. The light may interfere after having passed the diffractive optical element 1 so that a plurality of light spots 66 in a predefined pattern 67 is obtained at a certain distance from the diffractive optical element 1.

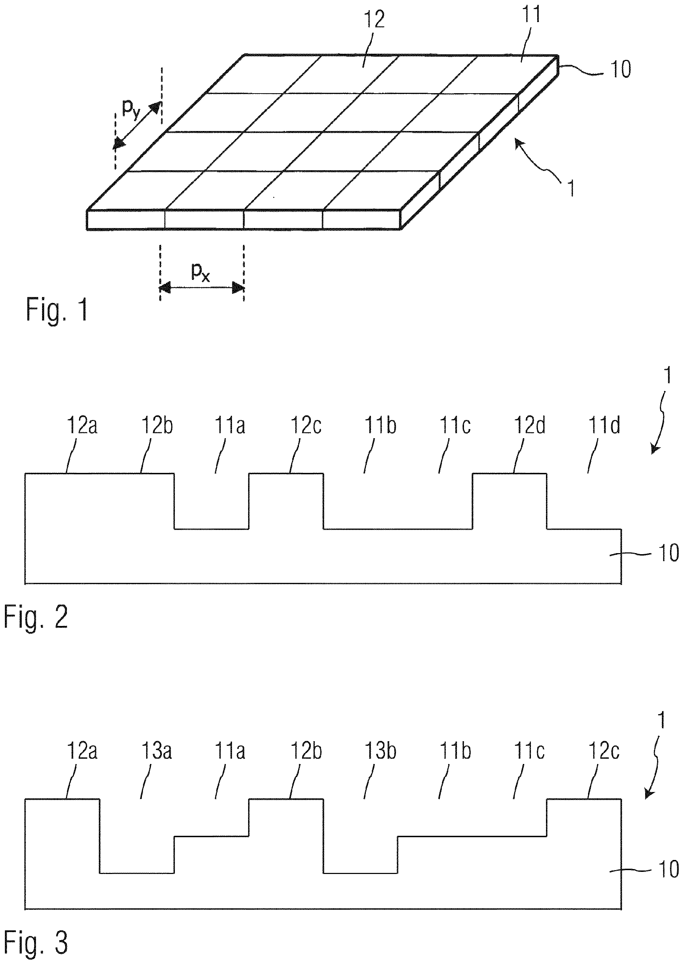

Turing now to fig. 1, a diffractive optical element 1 according to the invention is illustrated. As can be seen from the drawing, the diffractive optical element 1 comprises a material layer 10 which might be opaque if the diffractive optical element is used in a reflecting geometry. In other embodiments, when the diffractive optical element is used in a transmission geometry, the material layer 10 may be transparent in at least a part of the electromagnetic spectrum. In some embodiments, the material layer 10 may be selected from the group comprising any of a metal, an alloy, a glass, quartz, a polymer, polycarbonate, or a resin.

According to the invention, the material layer comprises a plurality of at least first subareas 11 and second subareas 12. Said subareas 11 and 12 may have any of first and second absorption coefficients or first and second thicknesses. Thus, the phase or the amplitude or both of light is altered, when being transmitted or reflected at the material layer 10 of the diffractive optical element 1. The light may interfere after having passed the diffractive optical element so that a plurality of light spots in a predefined pattern is obtained at a certain distance from the diffractive optical element 1. The subareas 11, 12 may be manufactured by any of lithography, printing, or embossing.

As an exemplary example, figure 1 shows 16 subareas in a regular pattern of 4 x 4 subareas having a pitch $p_x$ and $p_y$. This is by way of example only. It should be clear that in most embodiments, the number of subareas is much larger and may reach up to 1000 or up to 5000 or up to 10000 or up to 100000 or up to 1000000 or up to 10000000 in some embodiments.

The way how a specific subarea is assigned to be a first subarea 11 having first characteristics or to be a second subarea 12 having second characteristics is explained in greater detail below. It should be clear that the invention requires at least first subareas 11 having a first characteristic and second subareas 12 having a second characteristic to function properly. In other embodiments, a higher number of different subareas each having different characteristics may be used to increase the quality of the diffractive optical element 1.

Figure 2 illustrates a cross sectional view of a diffractive optical element 1 according to a first embodiment of the invention. The cross section shows 8 subareas which are shaped either as first subareas 11 having a first characteristic and second subareas 12 having a second characteristic. As can be seen from fig. 2, the material layer has a lower thickness in the first subareas 11a, 11b, 11c, and 11d and a higher thickness in the second subareas 12a, 12b, 12c, and 12d, wherein the thickness of each first subarea has an approximately constant first value and the thickness of each second subarea has an approximately constant second value.

This feature has the technical effect that the phase of a beam of light is shifted by a constant first value when passing through a first subarea and the phase of a beam of light is shifted by a constant second value when passing through a second subarea. Said first and second values may be π and 2 π in some embodiments. The transmitted light will interfere and form a desired light pattern behind the diffractive optical element 1 by diffraction.

Figure 3 illustrates a cross sectional view of a diffractive optical element 1 according to a second embodiment of the invention. Like elements are assigned like reference numbers so that the following description is restricted to the main differences.

As can be seen from figure 3, a third subarea 13 is used beside first and second subareas 11 and 12. As can be seen from fig. 3, the material layer has the lowest thickness in the third subareas 13a and 13b, a higher thickness in the first subareas 11a, 11b, and 11c, and the highest thickness in the second subareas 12a, 12b, and 12c.

This feature has the technical effect that the phase of a beam of light is shifted by a constant first value when passing through a first subarea, a constant second value when passing through a second subarea, and a constant third value when passing through a third subarea. Said first, second, and third values may be 2π/3, 4π/3 and 2 π in some embodiments.

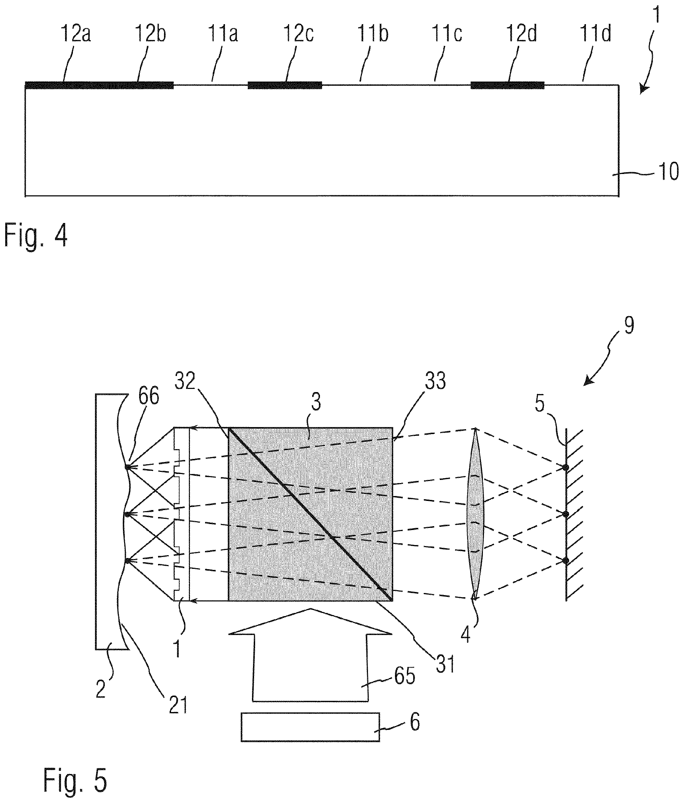

Figure 4 illustrates a cross sectional view of a diffractive optical element according to a third embodiment of the invention. Like elements are assigned like reference numbers so that the following description is restricted to the main differences.

As can be seen from fig. 4, the material layer 10 has a constant thickness over its entire surface. The first and second subareas 11 and 12 are defined by a coating which is either reflective or absorbing so that the diffractive optical element can be used in reflection or transmission geometry. Therefore, the material layer 10 shown in Figure 4 modulates the amplitude of reflected or transmitted light. Interference of this amplitude modulated light leads to a desired light pattern at a predefined distance from the material layer 10.

Figure 5 illustrates a cross sectional view of a confocal microscope 9 according to a first embodiment of the invention. The confocal microscope 9 comprises at least one light source 6, being adapted to emit at least one input light beam 65. The input light beam 65 may have a wavelength or a range of wavelengths from the visible range. In other embodiments, the input light beam 65 may have a wavelength or a range of wavelengths from the infrared or ultraviolet range of the spectrum. The input light beam 65 may comprise coherent light. Accordingly, the light source 6 may comprise a laser. Such a laser may be selected from any of a semiconductor laser, a gas laser, a dye laser or an excimer laser. The light source 6 may be composed from a plurality of individual light sources such as a diode array.

Furthermore, the microscope 9 comprises at least one beam splitter 3 having a first port 31, a second port 32 and a third port 33, and being adapted to receive said input light beam 65 on said first port 31 and to direct it to said second port 32.

During operation of the microscope, light from said second port 32 of the beam splitter 3 is directed to at least one diffractive optical element 1 according to the invention being operable to receive said input light beam 65 and generating a plurality of smaller light spots 66 on a target surface 21.

In some embodiments, the individual light spots 66 on the target surface 21 may cause fluorescence light. In other embodiments, at least a part of the incoming light of the individual light spots 66 may be reflected or scattered at the target surface 21 in the direction of the incoming light beam. Any of fluorescence light, reflected light, or scattered light emerging from the target surface 21 is referred to as "emerging light" in the following.

The emerging light propagates from the target surface 21 and passes the diffractive optical element 1 in the opposite direction to the second port 32 of the beam splitter 3. The emerging light enters the beam splitter 3 by this second port 32 and exits the beam splitter by the third port 33. The emerging light is then focused by an optional focusing means 4 to a focusing plane. It should be apparent that the invention is not restricted to a special embodiment of said focusing means 4. The focusing means may comprise at least one lens or at least one mirror. In some embodiments, the focusing means may comprise a plurality of lenses or a plurality of mirrors or a combination of at least one mirror and at least one lens which may be selected from any of focusing and defocusing elements and which are arranged on an optical axis to form the focusing means. After passing the optional focusing means 4, the emerging light is detected by an image sensor 5 being adapted to capture an image of said target surface from the emerging light. The image sensor 5 may comprise any of a CCD-Sensor, a CMOS-Sensor, an image intensifier tube or the like in order to capture a two dimensional image of the target surface 21.

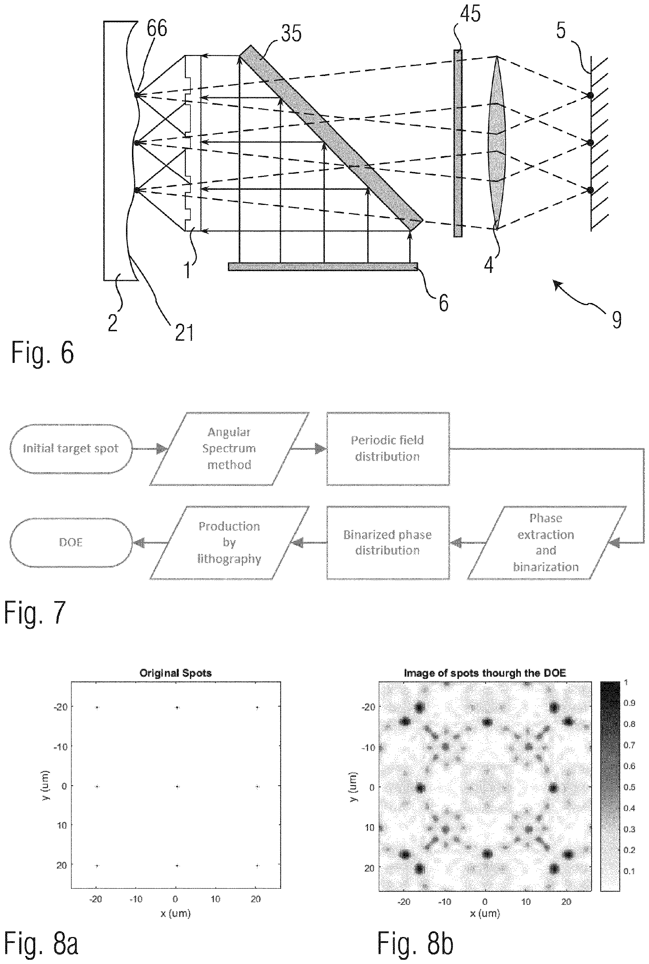

Figure 6 illustrates a cross sectional view of a confocal microscope according to a second embodiment of the invention. Like elements are assigned like reference numbers so that the following description is restricted to the main differences.

In the embodiment shown, said beam splitter 3 comprises a dichroic mirror 35. Such a dichroic mirror is reflective for some wavelength and transparent for other wavelength. This is in particular useful when sensing fluorescence light emerging from the surface 21 of the target 2 which may have another wavelength as the incoming radiation.

In some embodiments of the invention, said microscope 9 comprises further an emission filter 45 being arranged between the third port of the beam splitter and the image sensor. This feature may reduce the intensity of the scattered or reflected light from the target surface 21 at the image sensor so that fluorescence light may be detected with increased sensitivity.

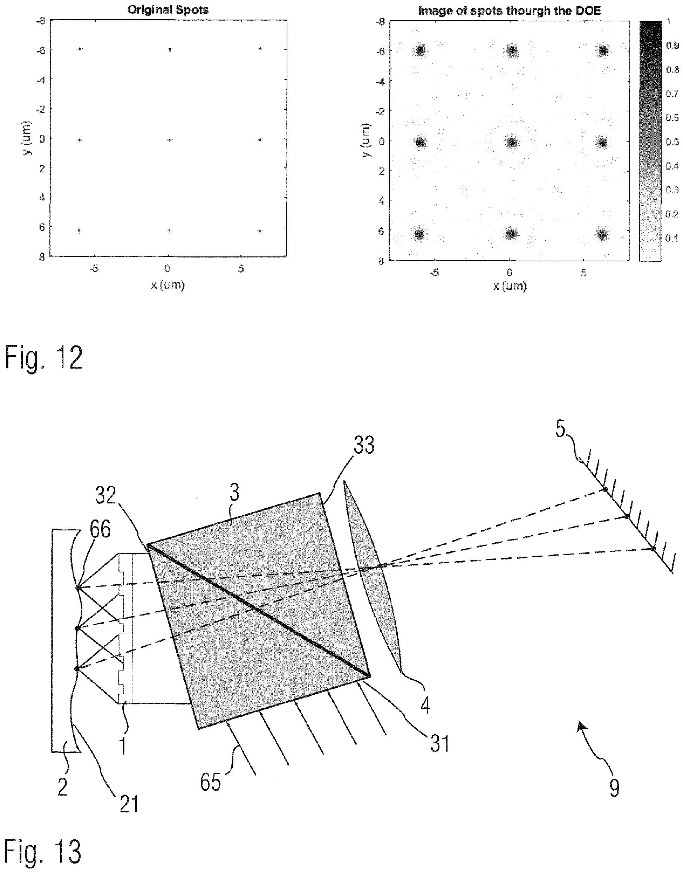

Figure 13 illustrates a cross sectional view of a confocal microscope 9 according to a third embodiment of the invention. Like elements are assigned like reference numbers so that the following description is restricted to the main differences.

In the embodiment shown, said beam splitter 3, the focusing means 4 and the image sensor 5 are arranged in a Scheimpflug geometry, i.e. the planes defined by the target 2, the focusing means 4 and the image sensor 5 respectively meet at a line. This is in particular useful when sensing targets 2 having a target surface 21 not being parallel to the image sensor 5.

Figure 7 illustrates a design method for a known diffractive optical element. The method starts with the desired field distribution of the light spot on the target surface. The field distribution on the diffractive optical element is calculated by an angular spectrum method. In order to obtain a plurality of light spots on the target, the field distribution is periodically reproduced on the surface of the diffractive optical element. Finally, the phase is extracted and binarized. Each phase shift is assigned one of two thicknesses so that the whole surface is covered by first and second subareas. In a last step, the diffractive optical element is produced, e.g. by a lithography process.

Figure 8 illustrates the performance of a confocal microscope having a known diffractive optical element. When using such a known diffractive optical element in a confocal microscope as shown in Figure 5 and 6, the problem arises that the target surface 21 has to be imaged through the diffractive optical element used for beam spot generation, i.e. emerging light passes the diffractive optical element 1 on its way to the image sensor 5.

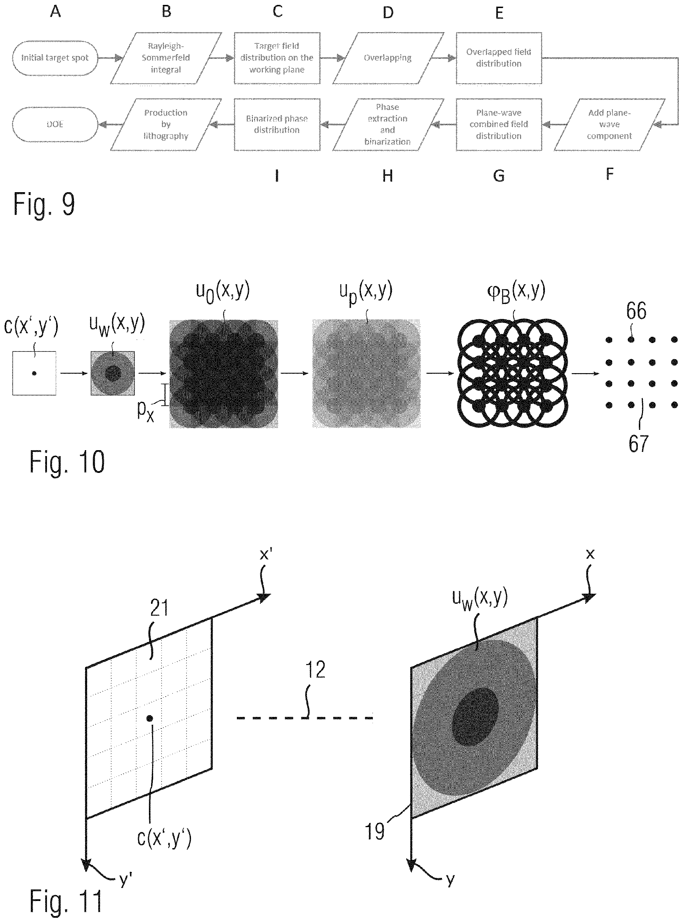

Figure 8a shows a hypothetical intensity distribution on the target surface 21 as it can be generated by the illumination with discrete light spots 66. Figure 8b illustrates what is seen by the image sensor 5 after the emerging light has passed the diffractive optical element 1, the beam splitter 3 and the optional focusing means 4. It is apparent that the signal is completely degraded on its way from the target surface to the image sensor so that the microscope 9 is unusable. The invention solves this problem by an alternatively designed diffractive optical element 1 which is explained in more detail below making reference to figures 9, 10 and 11.

Figure 9 illustrates a design method for a diffractive optical element according to the invention. Figure 10 illustrates the field distribution during different method steps and Figure 11 illustrates one method steps during the design of a diffractive optical element according to the invention in greater detail.

According to the invention, the arrangement of said first and second subareas on the material layer of the diffractive optical element is obtainable by the following method:

In a first step A, the desired field distribution $c(x',y')$ of a single light spot on the target surface 21 is specified. The field distribution may have a high intensity contrast factor, i.e. the ratio of the intensity on the center and the mean intensity is close to 1, or at least higher than 0.85 or higher than 0.9 or higher than 0.95.

Next, in step B, the field distribution $u_w(x,y)$ in a plane 19 defined by the material layer 10 at a specified working distance 12 for this single light spot is calculated. In some embodiments, calculation of the field distribution $u_w(x,y)$ is done by means of a Rayleigh-Sommerfeld-Integral. In other embodiments, any other method may be used such as an angular spectrum method or solving the Maxwell equations.

In some embodiments of the invention, calculating the field distribution $u_w(x,y)$ for a single light spot in the plane defined by the diffractive optical element is done by solving the following equation:

$$u_w(x,y) = \iint_S c(x',y') \frac{e^{-ik\sqrt{(x-x')^2+(y-y')^2+z^2}}z}{(x-x')^2+(y-y')^2+z^2} dx'dy',$$

wherein $c(x',y')$ denotes the field distribution of the light spot on the target surface and x, x', y, and y' are the coordinates used on the target and on the material layer of the diffractive optical element, respectively.

In some embodiments of the invention, calculating the field distribution $u_w(x,y)$ for a single light spot in the plane defined by the diffractive optical element is done by solving the following equation:

$$u_w(x,y) = \iint_S \frac{1}{2\pi} c(x',y') \frac{e^{ik\sqrt{(x-x')^2+(y-y')^2+z^2}}z}{(x-x')^2+(y-y')^2+z^2} \left(\frac{1}{\sqrt{(x-x')^2+(y-y')^2+z^2}} - ik\right) dx'dy',$$

wherein $c(x',y')$ denotes the field distribution of the light spot on the target surface and x, x', y, and y' are the coordinates used on the target and on the material layer of the diffractive optical element, respectively. The result C is shown in Figure 10.

In another embodiment of the invention, calculating the field distribution $u_w(x,y)$ for a single light spot in the plane defined by the diffractive optical element is done by solving the following equation:

$$u_w(x,y) = \iint_{-\infty}^{+\infty} C(\alpha,\beta) e^{-i\gamma(\alpha,\beta)z} e^{-i(\alpha x+\beta y)} d\alpha d\beta$$

wherein $C(\alpha,\beta) = (1/2\pi)^2 \iint_{-\infty}^{+\infty} c(x,y) e^{i(\alpha x+\beta y)} dx dy$ and wherein $\alpha^2 + \beta^2 + \gamma^2 = k^2 = (2\pi/\lambda)^2$, wherein C(x,y) denotes the field distribution of the light spot on the target surface and x, and y are the coordinates used on the target, and $\lambda$ being the wavelength.

As the diffractive optical element shall generate a predefined pattern 67 of light spots 66 during operation, said field distribution $u_w(x,y)$ of a single light spot is arranged in said plane in this predetermined pattern in step D. In some embodiments, this pattern may be rectangular or quadratic with a pitch $p$ between adjacent light spots. In other embodiments, another pattern may be selected such as a Nipkow disk or a statistical pattern. The resulting field distribution $u_0(x,y)$ of the arrangement is calculated by summing up the field distributions $u_w(x,y)$ of the single light spots. As an example, the field distribution $u_0(x,y)$ for a plurality of light spots having a rectangular arrangement with the pitch $p$ may be calculated by

$$u_o(x,y) = \sum_{i,j} u_w(x+ip, y+jp)$$

The result E is again shown in figure 10, third part from the left.

In the next step F, a plane-wave component $W$ is added to the overlapped field distribution $u_0(x,y)$ to get a plane-wave-combined field distribution $u_p(x,y)$. This plane-wave component $W$ may alter the transparency of the diffractive optical element. In some embodiments, the transparency may be increased. In other embodiments, the transparency may be reduced.

$$u_p(x,y) = u_o(x,y) + W$$

The result G obtained after this method step F is shown in figure 10, fourth part from the left.

In some embodiments of the invention, said plane-wave component $W$ is constant. This allows for an easy calculation of the plane-wave-combined field distribution $u_p(x,y)$.

In some embodiments of the invention, said plane-wave component W is determined by optimizing any of a transmitted intensity, a signal-to-noise-ratio, a numerical aperture of the spot, and a spot size. Optimization can be done either experimental or by computer simulations by stepwise altering the plane-wave component W and watching the selected variable.

In the next method step H, any of the phase $\varphi_B(x,y)$ or the amplitude of the plane-wave-combined field distribution $u_p(x,y)$ is determined at least in the subareas 11, 12, 13. This means that the field distribution $u_p(x,y)$ on the material layer is discretized at the locations of said subareas and a phase shift for incoming light is calculated so that the interference of this light behind the diffractive optical element results in the desired light pattern to be generated. Such a phase shift may be easily generated by the subareas having different thicknesses so that the time of travel is delayed in the high index material layer of the diffractive optical element compared with the surrounding atmosphere. The same effect may be achieved in other embodiments by masking some of the subareas as to affect their transmission. This intensity-modulated light originating from different subareas may interfere in the same manner to generate the desired pattern 67 of light spots 66. The result I of this method step is a binarized phase distribution as shown exemplarily in figure 10, fifth part from the left.

In some embodiments of the invention, determining the phase $\varphi_B(x,y)$ of the plane-wave-combined field distribution $u_p(x,y)$ is done by solving the following equation:

$$\varphi_B(x,y) = \mathrm{mod}\left(\left\lfloor \frac{\mathrm{arg}[u_p(x,y)]+B}{\pi} \right\rfloor, 2\right) \quad \varphi_B(x,y) = \frac{2\pi}{n}\,\mathrm{mod}\left(\left\lfloor \frac{\mathrm{arg}[u_p(x,y)]+B}{2\pi/n} \right\rfloor, n\right) \quad \varphi_B(x,y) = \frac{2\pi}{n}\,mod\left(\left\lfloor \frac{arg[u_p(x,y)]+B}{2\pi/n} \right\rfloor, n\right),$$

wherein n denotes the number of thicknesses of the material layer. As the number of thicknesses is directly related to the number of different phase shift values, it can be appreciated that a higher value for the parameter n may result in an improved optical quality of the diffractive optical element and a lower value for the parameter n may result in a diffractive optical element being easier to manufacture.

In some embodiments of the invention, the value for the parameter n may be selected between 2 and 6. In other embodiments, n is selected between 2 and 4. In still another embodiment, n is 2. These values may result in a good compromise between manufacturing effort and optical quality.

In some embodiments of the invention, when determining the phase $\varphi_B(x,y)$ from the plane-wave-combined field distribution $u_p(x,y)$, the parameter B may be constant. In some embodiments, the value for the parameter B is determined by optimizing any of a transmitted intensity, a signal-to-noise-ratio, a numerical aperture of the spot, and a spot size. Optimization can be done either experimental or by computer simulations by stepwise altering the parameter B and watching the selected variable.

Figure 12 illustrates the performance of a confocal microscope having a diffractive optical element according to the invention. It has been shown that the target surface may be imaged through the diffractive optical element according to the invention without the image suffering from strong degradation so that, when using the diffractive optical element in a microscope, opaque targets may be examined.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims. While the invention has been described by reference to certain preferred embodiments, it should be understood that these embodiments are within the spirit and scope of the inventive concepts described. This written description uses examples to disclose the invention, including the best mode, and also to enable any person skilled in the art to practice the invention, including making and using any devices or systems and performing any incorporated methods. The patentable scope of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Although specific terms are employed herein, they are used in a generic and descriptive sense only and not for purposes of limitation. Accordingly, it is intended that the invention not be limited by the embodiments, but that it have the full scope permitted by the language of the following claims.

**Claims**

1. Diffractive optical element (1) for generating from an input light beam (65) a plurality of smaller light spots (66) on a target surface (21), comprising a material layer (10) having a plurality of at least first and second subareas (11, 12, 13) having any of first and second absorption coefficients or first and second thicknesses, wherein the arrangement of said first and second subareas (11, 12, 13) on the material layer (10) is obtainable by calculating the field distribution $u_w(x,y)$ in a plane (19) defined by the material layer (10) for a single light spot (66),

arranging and overlapping said field distribution $u_w(x,y)$ in said plane (19) for a predetermined arrangement (67) of a plurality of light spots (66),

adding a plane-wave component W to the overlapped field distribution $u_0(x,y)$ to get a plane-wave-combined field distribution $u_p(x,y)$,

determining the phase $\varphi_B(x,y)$ and/or the amplitude of the plane-wave-combined field distribution $u_p(x,y)$ at least in the subareas (11, 12, 13).

2. Element according to claim 1, wherein calculating the field distribution $u_w(x,y)$ in a plane (19) defined by the material layer (10) for a single light spot (66) at a given distance (12) has been done by means of a Rayleigh-Sommerfeld-Integral or,

calculating the field distribution $u_w(x,y)$ for a single light spot (66) in the plane (19) is done by solving the following equation:

$$u_w(x,y) = \iint_S \frac{1}{2\pi} c(x',y') \frac{e^{ik\sqrt{(x-x')^2+(y-y')^2+z^2}}}{(x-x')^2+(y-y')^2+z^2} z \left(\frac{1}{\sqrt{(x-x')^2+(y-y')^2+z^2}} - ik\right) dx'dy',$$

wherein $c(x',y')$ denotes the field distribution of the light spot (66) on the target surface (21).

3. Element according to any of claims 1 or 2, wherein calculating the field distribution $u_w(x,y)$ in a plane (19) defined by the material layer (10) for a single light spot (66) at a given distance (12) has been done by means of a an angular spectrum method or

calculating the field distribution $u_w(x,y)$ for a single light spot in the plane is done by solving the following equation:

$$u_w(x,y) = \iint_{-\infty}^{+\infty} C(\alpha,\beta) e^{-i\gamma(\alpha,\beta)z} e^{-i(\alpha x + \beta y)} d\alpha d\beta$$

wherein $C(\alpha,\beta) = (1/2\pi)^2 \iint_{-\infty}^{+\infty} c(x,y) e^{i(\alpha x + \beta y)}$ and

wherein $\alpha^2 + \beta^2 + \gamma^2 = k^2 = (2\pi/\lambda)^2$, wherein

C(x,y) denotes the field distribution of the light spot on the target surface and x, and y are the coordinates used on the target, and $\lambda$ being the wavelength

4. Element according to any of claims 1 to 3, wherein said plane-wave component W is constant and/or

said plane-wave component W is determined by optimizing any of a transmitted intensity, a signal-to-noise-ratio, a nummerical aperture of the spot, and a spot size.

5. Element according to any of claims 1 or 4, wherein determining the phase $\varphi_B(x,y)$ of the plane-wave-combined field distribution $u_p(x,y)$ is done by solving the following equation:

$$\varphi_B(x,y) = \mathrm{mod}\left(\left\lfloor\frac{\mathrm{arg}[u_p(x,y)]+B}{\pi}\right\rfloor, 2\right) \quad \varphi_B(x,y) =$$

$$\frac{2\pi}{n} \mathrm{mod}\left(\left\lfloor\frac{\mathrm{arg}[u_p(x,y)]+B}{2\pi/n}\right\rfloor, n\right) \quad \varphi_B(x,y) = \frac{2\pi}{n} \mathrm{mod}\left(\left\lfloor\frac{\mathrm{arg}[u_p(x,y)]+B}{2\pi/n}\right\rfloor, n\right),$$

wherein n denotes the number of thicknesses of the material layer (10).

6. Element according to claim 5, wherein the parameter B is determined by optimizing any of a transmitted intensity, a signal-to-noise-ratio, a nummerical aperture of the spot, and a spot size.

7. Element according to any of claims 5 or 4, wherein
n is selected between 2 and 6 or

*n* is selected between 2 and 4 or
*n* is 2.

8. Confocal microscope (9) comprising
   at least one light source (6), being adapted to emit at least one input light beam (65);
   at least one beam splitter (3) having a first port (31), a second port (32) and a third port (33), and being adapted to receive said input light beam (65) on said first port (31) and to direct it to said second port (32);
   at least one diffractive optical element (1) according to any of claims 1 to 7 being operable to receive said input light beam (65) from the second port (32) of said beam splitter (3) and generating a plurality of smaller light spots (66) on a target surface (21) being arranged at a distance (12);
   at least one focusing means (4) and an image sensor (5) being adapted to capture an image of said target surface (21) from light originating from the target surface (21) and passing through said diffractive optical element (1) to the second port (32) of said beam splitter (3), the third port (33) of said beam splitter (3) and said lens (4) .

9. Microscope (9) according to claim 8, wherein said beam splitter (3) comprises a dichroic mirror (35).

10. Method for designing at least one diffractive optical element (1) comprising a material layer (10) having a plurality of at least first and second subareas (11, 12, 13) having any of first and second absorption coefficients or first and second thicknesses, wherein the arrangement of said first and second subareas (11, 12, 13) on the material layer (10) is obtained by
    calculating the field distribution $u_w(x,y)$ in a plane (19) defined by the material layer (10) for a single light spot (66) at a given distance (12),
    arranging and overlapping said field distribution $u_w(x,y)$ in said plane (19) for a predetermined arrangement (67) of a plurality of light spots (66),
    adding a plane-wave component $W$ to the overlapped field distribution $u_0(x,y)$ to get a plane-wave-combined field distribution $u_p(x,y)$,
    determining the phase $\varphi_B(x,y)$ and/or the amplitude of the plane-wave-combined field distribution $u_p(x,y)$ at least in the subareas.

11. Method according to claim 10, wherein
    calculating the field distribution $u_w(x,y)$ in a plane (19) defined by the material layer (10) for a single light spot (66) at a given distance (12) is done by means of a Rayleigh-Sommerfeld-Integral or
    calculating the field distribution $u_w(x,y)$ for a single light spot in the plane is done by solving the following equation:

$$u_w(x,y) = \iint_S \frac{1}{2\pi} c(x',y') \frac{e^{ik\sqrt{(x-x')^2+(y-y')^2+z^2}}}{(x-x')^2+(y-y')^2+z^2} z \left(\frac{1}{\sqrt{(x-x')^2+(y-y')^2+z^2}} - ik\right) dx'dy',$$

wherein $c(x',y')$ denotes the field distribution of the light spot on the target surface.

12. Method according to any of claims 10 to 11, said plane-wave component $W$ is constant and/or
    said plane-wave component $W$ is determined by optimizing any of a transmitted intensity, a signal-to-noise-ratio, a nummerical aperture of the spot, and a spot size.

13. Method according to any of claims 10 or 12, wherein determining the phase $\varphi_B(x,y)$ of the plane-wave-combined field distribution $u_p(x,y)$ is done by solving the following equation:

$$\varphi_B(x,y) = \text{mod}\left(\left\lfloor\frac{\arg[u_p(x,y)]+B}{\pi}\right\rfloor, 2\right) \varphi_B(x,y) =$$

$$\frac{2\pi}{n}\text{mod}\left(\left\lfloor\frac{\arg[u_p(x,y)]+B}{2\pi/n}\right\rfloor, n\right) \varphi_B(x,y) = \frac{2\pi}{n}\text{mod}\left(\left\lfloor\frac{\arg[u_p(x,y)]+B}{2\pi/n}\right\rfloor, n\right),$$

wherein n denotes the number of thicknesses of the material layer (10).

14. Method according to claim 13, wherein the parameter B is determined by optimizing any of a transmitted intensity, a signal-to-noise-ratio, a nummerical aperture of the spot, and a spot size.

15. Method according to any of claims 13 or 14, wherein
$n$ is selected between 2 and 6 or
$n$ is selected between 2 and 4 or
$n$ is 2.

Fig. 1

Fig. 2

Fig. 3

Fig. 4

Fig. 5

Fig. 6

Fig. 7

Fig. 8a

Fig. 8b

A       B              C              D              E

Initial target spot → Rayleigh-Sommerfeld integral → Target field distribution on the working plane → Overlapping → Overlapped field distribution

DOE ← Production by lithography ← Binarized phase distribution ← Phase extraction and binarization ← Plane-wave combined field distribution ← Add plane-wave component

I       H              G              F

## Fig. 9

$c(x', y')$   $u_W(x,y)$   $u_0(x,y)$   $u_p(x,y)$   $\varphi_B(x,y)$

66

67

$p_X$

## Fig. 10

$x'$

21

12

$u_W(x,y)$

$x$

$c(x', y')$

19

$y'$       $y$

## Fig. 11

Original Spots

Image of spots thourgh the DOE

Fig. 12

Fig. 13

Europäisches
Patentamt

European
Patent Office

Office européen
des brevets

# EUROPEAN SEARCH REPORT

Application Number

EP 18 20 6402

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 124 843 A (LEGER JAMES R [US] ET AL) 23 June 1992 (1992-06-23) * figures 1,1a,2a,2b * * page 3, line 5 - line 63 * * column 5, line 20 - line 33 * * column 1, line 50 - column 2, line 31 * | 1-7, 10-15 | INV. G02B5/18 G02B27/00 |
| X | WO 2006/120386 A1 (ITI SCOTLAND LTD [GB]; SMITH STANLEY DESMOND [GB]) 16 November 2006 (2006-11-16) * the whole document * | 1,8,9 | |
| X | US 2012/038934 A1 (MIYASAKA KOJI [JP] ET AL) 16 February 2012 (2012-02-16) * the whole document * | 1-7, 10-15 | |
| X | EBATA K ET AL: "OPTICAL PROPERTIES OF ZNSE DIFFRACTIVE OPTICAL ELEMENTS FOR SPOT ARRAY GENERATION", VISUAL COMMUNICATIONS AND IMAGE PROCESSING; 20-1-2004 - 20-1-2004; SAN JOSE,, vol. 3823, 1 June 1999 (1999-06-01), pages 224-234, XP001062064, DOI: 10.1117/12.360992 ISBN: 978-1-62841-730-2 * the whole document * | 1-7, 10-15 | |

TECHNICAL FIELDS
SEARCHED (IPC)

G02B

The present search report has been drawn up for all claims

| Place of search | Date of completion of the search | Examiner |
|---|---|---|
| Munich | 6 May 2019 | Dedman, Emma |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 20 6402

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2019

| Patent document cited in search report | | Publication date | Patent family member(s) | | Publication date |
|---|---|---|---|---|---|
| US 5124843 | A | 23-06-1992 | NONE | | |
| WO 2006120386 | A1 | 16-11-2006 | NONE | | |
| US 2012038934 | A1 | 16-02-2012 | JP | 5834602 B2 | 24-12-2015 |
| | | | JP | 2012058729 A | 22-03-2012 |
| | | | US | 2012038934 A1 | 16-02-2012 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006035393 A2